# EUROPEAN PATENT SPECIFICATION

(11) **EP 1 029 023 B1**
(45) Date of publication and mention of the grant of the patent: **03.05.2006**
(21) Application number: 98943907.0
(22) Date of filing: 08.09.1998
(51) Int. Cl.: C09K 21/02, B27K 3/52, B27N 9/00, D21H 21/34, C09D 5/18

(54) **FIRE-RETARDANT AND BIOCIDE COMPOSITION AND PROCESS FOR ITS PREPARATION**
FLAMMHEMMENDE UND BIOZIDE ZUSAMMENSETZUNG UND VERFAHREN ZU IHRER HERSTELLUNG
COMPOSITION IGNIFUGE ET BIOCIDE ET PROCEDE DE PREPARATION

(30) Priority: 11.09.1997 FI 973662
(43) Date of publication of application: 23.08.2000
(73) Proprietor: Futumon Oy, 94200 Kemi (FI)
(72) Inventor: SMOLANDER, Raimo, FIN-94500 Lantiosaari (FI); PUIKKO, Paavo, FIN-94200 Kemi (FI)
(74) Representative: Syvänen, Ralf Ossian
(86) International application number: PCT/FI1998/000698
(87) International publication number: WO 1999/013022

(56) References cited:
- AU-A- 3 382 784
- DE-A1- 19 516 186
- GB-A- 2 255 345
- US-A- 5 405 555
- FILE WPI, Derwent Accession No. 83-02779K(25), JUJO PAPER CO. LTD., "Mfg. Heat-Insulating and Sound-Prooflaky Materials - By First Blending Cellulosic Fibre with Mixt. of Water Repellent and/or Size, Protective Colloid Forming Agent and Flame Retardant"; & JP,A,57 191 043 (24-11-82) DW8302.

## Description

The invention relates to a fire-retardant and biocide composition containing borax and a certain binder, a process for its preparation, its use and products treated with it.

It is known to use boron-containing compositions as fire-retardant agents and anti-rot agents for protecting wood, see e.g. FI 44703, JP 57-191, 043 and DE 4,402,600. However, there are problems related to the above-mentioned prior art compositions. For example, it is usually complicated to prepare and use them.

AU patent application No. 33827/84 discloses a preservative composition for the treatment of timber containing boric acid, borax, carboxymethyl cellulose and water. It does not appear from this document that the composition described is neutral like in this invention but rather alkaline. In addition, the carboxymethyl cellulose (CMC) used in the composition of said patent application is a long-chain CMC, whereas in this invention it is a short-chain CMC. Also, the amount of CMC in said document is significantly smaller than that used in the present invention.

The object of the present invention is to eliminate the above-mentioned problems.

The invention relates to a fire-retardant and biocide composition, characterized in that it contains 5 to 35 parts by weight of boric acid (H₃BO₃), 5 to 35 parts by weight of borax (Na₂B₄O₇ · 10H₂O or Na₂B₄O₇ · 5H₂O), 1 to 10 parts by weight of carboxymethyl cellulose (CMC) Finnfix 30™, 20 to 90 parts by weight of water and optional additional components.

The invention also relates to a process for preparing the fire-retardant and biocide composition described above. The process is characterized in that it comprises the following steps:
a) heating water to a temperature of 60 to 100°C,
b) adding boric acid and borax to the water under stirring,
c) cooling the resulting solution to a temperature of 40 to 80 °C, and
d) adding carboxymethyl cellulose (CMC) Finnfix 30™ to the solution.

The invention further relates to a concentrate which is characterized in that it contains 5 to 35 parts by weight of boric acid (H₃BO₃), 5 to 35 parts by weight of borax (Na₂B₄O₇ · 10H₂O or Na₂B₄O₇ · 5H₂O) and 1 to 10 parts by weight of carboxymethyl cellulose (CMC) Finnfix 30™.

In addition, the invention relates to a method of protecting objects against fire and biologic growth. The method is characterized in that the objects are treated with the fire-retardant and biocide composition described above.

Finally, the invention relates to a product which is characterized in that it is treated with the fire-retardant and biocide composition described above.

It has been found that carboxymethyl cellulose (CMC) prevents crystallization of boric acid and borax, and thus the composition may be prepared in a highly concentrated form, which also improves the effectiveness of the composition. CMC decreases the surface tension of the solution and thus facilitates penetration of the solution into the product. In addition, CMC has adhesive properties which allow to bind the protective agent inside the product and on its surface.

The composition contains suitably 5 to 35, preferably 10 to 20 parts by weight of boric acid, 5 to 35, preferably 10 to 20 parts by weight of borax, 1 to 10, preferably 3 to 7 parts by weight of CMC, and 20 to 90, preferably 40 to 60 parts by weight of water. A particularly preferable composition contains 15 parts by weight of boric acid, 15 parts by weight of borax, 5 parts by weight of CMC and 65 parts by weight of water. The concentrate according to the invention also contains the same components, except for the water, in the above-mentioned preferable proportions by weight. An advantage of a dry concentrate is that its handling is easy, which allows the preparation of an aqueous composition on the spot.

In addition to the above-mentioned components, the composition and concentrate of the invention may contain other components, such as cellulose fibres, viscose fibres and pigments, the amount of which is suitably 5 to 35 parts by weight, preferably 10 to 30 parts by weight. Suitable pigments include metal oxides.

According to the invention, the composition is prepared by heating water to a temperature of 60 to 100 °C, preferably to 80 °C, whereafter boric acid and borax are added under stirring. The resulting solution is cooled to a temperature of 40 to 80 °C, preferably to 60 °C, whereafter CMC and any other components are added to the solution by stirring. A dry concentrate is obtained by evaporating the water off.

Examples of objects that can be protected against fire and biological growth with the composition of the invention are wood materials, concrete materials, cellulose-based materials, inside walls, roofs, sound insulating and heat insulating panels, acoustic boards, coating boards made of glass wool and mineral wool, sheets made of cardboard, cellulose and paper, paints, adhesives and wallpaper pastes. In order to protect the object it is treated with a composition of the invention, or a composition or a concentrate of the invention is added to the object for example during the preparation process. The treatment can be carried out e.g. by spraying, spreading or impregnating using high pressure or low pressure. It has turned out to be particularly advantageous to impregnate wood with the composition of the invention.

The composition of the invention also has the following advantages: it does not contain heavy metals, copper, chrome or arsine, and its pH is almost neutral.

The following examples illustrate the invention.

### Example 1

A composition containing the following agents was prepared
15 parts by weight of boric acid,
15 parts by weight of borax,
5 parts by weight of CMC (Finnfix 30™), and
65 parts by weight of water

Water was heated to a temperature of 80 °C in a vessel, whereafter boric acid and borax were added to the water by stirring. The resulting solution was cooled to a temperature of 60 °C, and CMC was added by stirring.

### Example 2

A composition containing the following agents was prepared
2 parts by weight of boric acid,
2 parts by weight of borax,
1 part by weight of CMC (Finnfix 30™),
20 parts by weight of cellulose fibres, length 2.8 to 3 mm,
1 part by weight of viscose fibres (Visil™), and
74 parts by weight of water

Water was heated to a temperature of 80°C in a vessel, whereafter boric acid and borax were added to the water by stirring. The resulting solution was cooled to a temperature of 50 °C, and CMC, cellulose fibres and viscose fibres were added by stirring.

### Example 3

A layer of 2 mm of the composition according to example 2 was sprayed onto an insulating board made of cellulose, whereafter the board was allowed to dry. The treated board did not catch fire nor did it become mouldy.

### Example 4

A piece of wood was impregnated with the composition according to example 1 using high pressure. The treated piece of wood did not catch fire nor did it become mouldy.

### Test results

In the tests carried out at the Technical Research Centre of Finland (VTT), insulating boards made of cellulose-viscose fibres which had been sprayed with the composition according to example 1 received value 1/1 in the surface class as well as in the fire spreading class. In the biological test no gas was formed in the boards from rot fungus, putrefactive fungus or cellar fungus. Neither did any mould form on the boards.

In the six-month tests carried out by the VTT no biological growth formed on wood treated with the composition according to example 1. Furthermore, in the surface fire test the treated wood lasted quadruple the testing time of surface fire class 1.

## Claims

1. A fire-retardant and biocide composition, **characterized in that** it contains 5 to 35 parts by weight of boric acid (H₃BO₃), 5 to 35 parts by weight of borax (Na₂B₄O₇·10H₂O or Na₂B₄O₇·5H₂O), 1 to 10 parts by weight of carboxymethyl cellulose (CMC) Finnfix 30™, 20 to 90 parts by weight of water and optional additional components.

2. A composition according to claim 1, **characterized in that** it comprises 10 to 20 parts by weight of boric acid, 10 to 20 parts by weight of borax, 3 to 7 parts by weight of CMC Finnfix 30™ and 40 to 60 parts by weight of water.

3. A composition according to claim 2, **characterized in that** it contains 15 parts by weight of boric acid, 15 parts by weight of borax, 5 parts by weight of CMC Finnfix 30™ and 65 parts by weight of water.

4. A composition according to any one of claims 1 to 3, **characterized in that** it contains cellulose fibres as an additional component.

5. A composition according to claim 4, **characterized in that** it contains 5 to 35 parts by weight of cellulose fibres.

6. A composition according to any one of claims 1 to 5, **characterized in that** it contains viscose fibres as an additional component.

7. A composition according to claim 6, **characterized in that** it contains 5 to 35 parts by weight of viscose fibres.

8. A process for preparing a fire-retardant and biocide composition according to any one of claims 1 to 7, **characterized in that** it comprises the following steps:
a) heating water to a temperature of 60 to 100°C,
b) adding boric acid and borax to the water under stirring,
c) cooling the resulting solution to a temperature of 40 to 80 °C, and
d) adding carboxymethyl cellulose (CMC) Finnfix 30™ and any cellulose fibres and viscose fibres to the solution.

9. A process according to claim 8, **characterized in that** in step a) water is heated to a temperature of 80 °C.

10. A process according to claim 8 or 9, **characterized in that** in step c) the solution is cooled to a temperature of 60 °C.

11. A fire-retardant and biocide concentrate, **characterized in that** it contains 5 to 35 parts by weight of boric acid (H₃BO₃), 5 to 35 parts by weight of borax (Na₂B₄O₇· 10H₂O or Na₂B₄O₇·5H₂O) and 1 to 10 parts by weight of carboxymethyl cellulose (CMC) Finnfix 30™.

12. A concentrate according to claim 11, **characterized in that** it contains 10 to 20 parts by weight of boric acid, 10 to 20 parts by weight of borax and 3 to 7 parts by weight of CMC Finnfix 30™.

13. A concentrate according to claim 12, **characterized in that** it contains 15 parts by weight of boric acid, 15 parts by weight of borax and 5 parts by weight of CMC Finnfix 30™.

14. A method of protecting an object against fire and biological growth, **characterized in that** the object is treated with a composition according to any one of claims 1 to 7, or a composition or a concentrate according to any one of claims 1 to 13 is added to the object.

15. A method according to claim 14, **characterized in that** the object is a wood material.

16. A method according to claim 15, **characterized in that** the object is an insulating board.

17. A method according to claim 14, **characterized in that** the object is a construction board made of cardboard, cellulose and paper.

18. A method according to claim 14, **characterized in that** the object is a paint.

19. A method according to claim 14, **characterized in that** the object is an adhesive.

20. A use of a fire-retardant and biocide composition according to any one of claims 1 to 7 for the treatment of a wood material; an insulating board; a construction board made of cardboard, cellulose and paper; a paint; or an adhesive.

21. A use of a fire-retardant and biocide concentrate according to any one of claims 11 to 13 for the treatment of a paint or an adhesive.

## Patentansprüche

1. Eine feuerhemmende und biozide Zusammensetzung, die **dadurch gekennzeichnet ist, dass** sie 5 bis 35 Gewichtsanteile Borsäure (H₃BO₃), 5 bis 35 Gewichtsanteile Borax (Na₂B₄O₇·10 H₂O oder Na₂B₄O₇·5 H₂O), 1 bis 10 Gewichtanteile Carboxymethylcellulose (CMC) Finnfix 30®, 20 bis 90 Gewichtsanteile Wasser und optional zusätzliche Komponenten enthält.

2. Eine Zusammensetzung gemäß Anspruch 1, die **dadurch gekennzeichnet ist, dass** sie 10 bis 20 Gewichtsanteile Borsäure, 10 bis 20 Gewichtsanteile Borax, 3 bis 7 Gewichtsanteile CMC Finnfix 30® und 40 bis 60 Gewichtsanteile Wasser umfasst.

3. Eine Zusammensetzung gemäß Anspruch 2, die **dadurch gekennzeichnet ist, dass** sie 15 Gewichtsanteile Borsäure, 15 Gewichtsanteile Borax, 5 Gewichtsanteile CMC Finnfix 30® und 65 Gewichtsanteile Wasser enthält.

4. Eine Zusammensetzung gemäß einem der Ansprüche 1 bis 3, die **dadurch gekennzeichnet ist, dass** sie Cellulosefasern als eine zusätzliche Komponente enthält.

5. Eine Zusammensetzung gemäß Anspruch 4, die **dadurch gekennzeichnet ist, dass** sie 5 bis 35 Gewichtsanteile Cellulosefasern enthält.

6. Eine Zusammensetzung gemäß einem der Ansprüche 1 bis 5, die **dadurch gekennzeichnet ist, dass** sie Viskosefasern als eine zusätzliche Komponente enthält.

7. Eine Zusammensetzung gemäß Anspruch 6, die **dadurch gekennzeichnet ist, dass** sie 5 bis 35 Gewichtsanteile Viskosefasern enthält.

8. Ein Verfahren zur Herstellung einer feuerhemmenden und bioziden Zusammensetzung gemäß einem der Ansprüche 1 bis 7, das **dadurch gekennzeichnet ist, dass** es die folgenden Schritte umfasst:
a) das Erwärmen von Wasser auf eine Temperatur von 60 bis 100°C,
b) das Hinzufügen von Borsäure und Borax zu dem Wasser unter Rühren,
c) das Abkühlen der resultierenden Lösung auf eine Temperatur von 40 bis 80 °C, und
d) das Hinzufügen von Carboxymethylcellulose (CMC) Finnfix 30® und jeglicher Zellulosefasern und Viskosefasern zu der Lösung.

9. Ein Verfahren gemäß Anspruch 8, das **dadurch gekennzeichnet ist, dass** in Schritt
a) Wasser auf eine Temperatur von 80 °C erwärmt wird.

10. Ein Verfahren gemäß Anspruch 8 oder 9, das **dadurch gekennzeichnet ist, dass** in die Lösung Schritt c) auf eine Temperatur von 60°C abgekühlt wird.

11. Ein feuerhemmendes und biozides Konzentrat, das **dadurch gekennzeichnet ist, dass** es 5 bis 35 Gewichtsanteile Borsäure (H₃BO₃), 5 bis 35 Gewichtsanteile Borax (Na₂B₄O₇·10 H₂O oder Na₂B₄O₇·5 H₂O) und 1 bis 10 Gewichtsanteile Carboxymethylcellulose (CMC) Finnfix 30® enthält.

12. Ein Konzentrat gemäß Anspruch 11, dass **dadurch gekennzeichnet ist, dass** es 10 bis 20 Gewichtsanteile Borsäure, 10 bis 20 Gewichtsanteile Borax und 3 bis 7 Gewichtsanteile CMC Finnfix 30® enthält.

13. Ein Konzentrat gemäß Anspruch 12, das **dadurch gekennzeichnet ist, dass** es 15 Gewichtsanteile Borsäure, 15 Gewichtsanteile Borax und 5 Gewichtsanteile CMC Finnfix 30® enthält.

14. Ein Verfahren zum Schützen eines Gegenstandes gegen Feuer und biologisches Wachstum, das **dadurch gekennzeichnet ist, dass** der Gegenstand mit einer Zusammensetzung gemäß einem der Ansprüche 1 bis 7 behandelt wird oder eine Zusammensetzung oder ein Konzentrat gemäß einem der Ansprüche 1 bis 13 zu dem Gegenstand hinzugefügt wird.

15. Ein Verfahren gemäß Anspruch 14, das **dadurch gekennzeichnet ist, dass** der Gegenstand ein Material aus Holz ist.

16. Ein Verfahren gemäß Anspruch 15, das **dadurch gekennzeichnet ist, dass** der Gegenstand ein isolierendes Brett ist.

17. Ein Verfahren gemäß Anspruch 14, das **dadurch gekennzeichnet ist, dass** der Gegenstand ein Konstruktionsbrett ist, das aus Pappe, Zellulose und Papier hergestellt wird.

18. Ein Verfahren gemäß Anspruch 14, das **dadurch gekennzeichnet ist, dass** der Gegenstand eine Farbe ist.

19. Ein Verfahren gemäß Anspruch 14, das **dadurch gekennzeichnet ist, dass** der Gegenstand ein Klebstoff ist.

20. Eine Verwendung einer feuerhemmenden und bioziden Zusammensetzung gemäß einem der Ansprüche 1 bis 7 für die Behandlung eines Materials aus Holz, eines isolierenden Bretts, eines Konstruktionsbretts, das aus Pappe, Zellulose und Papier hergestellt wird, einer Farbe oder eines Klebstoffes.

21. Eine Verwendung eines feuerhemmenden und bioziden Konzentrats gemäß einem der Ansprüche 11 bis 13 für die Behandlung einer Farbe oder eines Klebstoffes.

## Revendications

1. Composition ignifugeante et biocide, **caractérisée en ce qu'**elle contient 5 à 35 parties en poids d'acide borique (H₃BO₃), 5 à 35 parties en poids de borax (Na₂B₄O₇.10H₂O ou Na₂B₄O₇.5H₂O), 1 à 10 parties en poids de carboxyméthylcellulose (CMC) Finnfix 30™, 20 à 90 parties en poids d'eau et de constituants supplémentaires facultatifs.

2. Composition selon la revendication 1, **caractérisée en ce qu'**elle comprend 10 à 20 parties en poids d'acide borique, 10 à 20 parties en poids de borax, 3 à 7 parties en poids de CMC Finnfix 30™ et 40 à 60 parties en poids d'eau.

3. Composition selon la revendication 2, **caractérisée en ce qu'**elle contient 15 parties en poids d'acide borique, 15 parties en poids de borax, 5 parties en poids de CMC Finnfix 30™ et 65 parties en poids d'eau.

4. Composition selon l'une quelconque des revendications 1 à 3, **caractérisée en ce qu'**elle contient des fibres de cellulose comme constituant supplémentaire.

5. Composition selon la revendication 4, **caractérisée en ce qu'**elle contient 5 à 35 parties en poids de fibres de cellulose.

6. Composition selon l'une quelconque des revendications 1 à 5, **caractérisée en ce qu'**elle contient des fibres de viscose comme constituant supplémentaire.

7. Composition selon la revendication 6, **caractérisée en ce qu'**elle contient 5 à 35 parties en poids de fibres de viscose.

8. Procédé de préparation d'une composition ignifugeante et biocide selon l'une quelconque des revendications 1 à 7, **caractérisé en ce qu'**il comprend les étapes suivantes:
a) chauffer de l'eau à une température de 60 à 100°C,
b) ajouter de l'acide borique et du borax à l'eau sous agitation,
c) refroidir la solution ainsi obtenue à une température de 40 à 80°C, et
d) ajouter de la carboxyméthylcellulose (CMC) Finnfix 30™ et des fibres de cellulose ou des fibres de viscose à la solution.

9. Procédé selon la revendication 8, **caractérisé en ce que**, dans l'étape a), l'eau est chauffée à une température de 80°C.

10. Procédé selon la revendication 8 ou 9, **caractérisé en ce que**, dans l'étape c), la solution est refroidie à une température de 60°C.

11. Concentré ignifugeant et biocide, **caractérisé en ce qu'**il contient 5 à 35 parties en poids d'acide borique (H₃BO₃), 5 à 35 parties en poids de borax (Na₂B₄O₇.10H₂O ou Na₂B₄O₇.5H₂O) et 1 à 10 parties en poids de carboxyméthylcellulose (CMC) Finnfix 30™.

12. Concentré selon la revendication 11, **caractérisé en ce qu'**il contient 10 à 20 parties en poids d'acide borique, 10 à 20 parties en poids de borax et 3 à 7 parties en poids de CMC Finnfix 30™.

13. Concentré selon la revendication 12, **caractérisé en ce qu'**il contient 15 parties en poids d'acide borique, 15 parties en poids de borax et 5 parties en poids de CMC Finnfix 30™.

14. Procédé de protection d'un objet contre le feu et la croissance biologique, **caractérisé en ce que** l'objet est traité avec une composition selon l'une quelconque des revendications 1 à 7, ou **en ce qu'**une composition ou un concentré selon l'une quelconque des revendications 1 à 13 est ajouté à l'objet.

15. Procédé selon la revendication 14, **caractérisé en ce que** l'objet est un matériau en bois.

16. Procédé selon la revendication 15, **caractérisé en ce que** l'objet est un panneau isolant.

17. Procédé selon la revendication 14, **caractérisé en ce que** l'objet est un panneau de construction fait de carton, de cellulose et de papier.

18. Procédé selon la revendication 14, **caractérisé en ce que** l'objet est une peinture.

19. Procédé selon la revendication 14, **caractérisé en ce que** l'objet est un adhésif.

20. Utilisation d'une composition ignifugeante et biocide selon l'une quelconque des revendications 1 à 7 pour le traitement d'un matériau en bois, d'un panneau isolant, d'un panneau de construction fait de carton, de cellulose et de papier, d'une peinture ou d'un adhésif.

21. Utilisation d'un concentré ignifugeant et biocide selon l'une quelconque des revendications 11 à 13 pour le traitement d'une peinture ou d'un adhésif.
